# EUROPEAN PATENT APPLICATION

(11) **EP 4 144 592 A1**
(43) Date of publication of application: **08.03.2023**
(21) Application number: 22193647.9
(22) Date of filing: 02.09.2022
(51) Int. Cl.: B60R 15/04

(54) **PORTABLE WASTE WATER TANK AND METHOD FOR DISCHARGING WASTE WATER**

(30) Priority: 02.09.2021 NL 2029108
(71) Applicant: Recravan B.V., 7481 EZ Haaksbergen (NL)
(72) Inventor: Wildenborg, Gerhardus Bernardus, 7481 EZ Haaksbergen (NL)
(74) Representative: Arnold & Siedsma

(57) **Abstract**

The invention relates to a portable waste water tank, for instance for placing under a recreational vehicle such as a caravan or camper, for collecting waste water, such as greywater, from the recreational vehicle and discharging it. The waste water tank comprises a bottom and a peripheral wall connected thereto, these together defining a receiving space for liquid, such as waste water, for instance greywater. The receiving space has an opening for letting liquid into the receiving space and an outlet for letting liquid out of the receiving space. The portable waste water tank further has an overflow system, wherein the overflow system comprises at least one overflow inlet which is connected for liquid throughflow to the receiving space at a distance from the bottom. The at least one overflow inlet is also connected for liquid throughflow to the outlet of the receiving space. The invention also relates to a method for discharging waste water with such a portable waste water tank.

## Description

The invention relates to a portable waste water tank, for instance for placing under a recreational vehicle such as a caravan or camper, for collecting waste water, such as greywater, from the recreational vehicle and discharging it, wherein the waste water tank comprises a bottom and a peripheral wall connected thereto, these together defining a receiving space for liquid, such as waste water, for instance greywater, wherein the receiving space has an opening for letting liquid into the receiving space and an outlet for letting liquid out of the receiving space.

Portable waste water tanks are per se known and are generally used to collect water from a recreational vehicle, and later discharge it by carrying the waste water in the portable waste water tank to for instance a drain. A drawback of such waste water tanks is that they must be emptied relatively often.

The invention therefore has for its object to provide a portable waste water tank which need not be emptied, or at least less frequently.

The object is achieved with a portable waste water tank according to the preamble with an overflow system, wherein the overflow system comprises at least one overflow inlet which is connected for liquid throughflow to the receiving space at a distance from the bottom, wherein the at least one overflow inlet is connected for liquid throughflow to the outlet of the receiving space.

By providing the overflow system a part of the water can leave the waste water tank when a relatively large quantity of water is let into the waste water tank. Because the overflow inlet lies at a distance from the bottom with the receiving space, solid substances, such as particles insoluble in the waste water, with a greater density than the waste water can settle in the waste water in the waste water tank. They thereby do not leave the waste water tank, or do so to lesser extent, even when a relatively large quantity of waste water is let into the waste water tank. The overflow system thereby has a filtering effect, whereby it is not undesirable, or less so, to allow the waste water to flow out of the waste water tank.

The overflow system can alternatively or additionally provide the advantage that a determined minimum quantity of waste water can remain in the waste water tank. In other words, the overflow system prevents the waste water tank from emptying completely. Hereby, the waste water tank remains relatively heavy, making it less susceptible to being moved by wind.

In an embodiment of the portable waste water tank the overflow system is provided at least partially, preferably wholly, inside the receiving space.

Providing the overflow system in the receiving space protects the overflow system against weather influences and/or impact. When arranged inside the receiving space, the overflow system is additionally invisible from the outside. It can hereby be prevented at least partially that the discharging of waste water is visible from a distance. It is advantageous here for at least the peripheral wall to be opaque.

The visibility of the discharging of waste water can be reduced further when the overflow outlet is situated in the bottom. The overflow outlet is thereby not visible, or hardly so. Placement of the overflow outlet in the bottom also ensures that waste water leaving the tank does not contaminate the tank, or hardly so.

In another embodiment of the portable waste water tank it is further provided with a shut-off valve which is displaceable from a closed position, in which the shut-off valve shuts off the overflow system and prevents liquid throughflow therethrough, to an open position in which the shut-off valve allows liquid flow through the overflow system.

By means of the shut-off valve a user can opt to use the portable waste water tank as a traditional waste water tank, i.e. without overflow, or can conversely turn on the overflow. This also makes the waste water tank suitable for use at locations where discharging waste water is impossible or undesirable.

It is particularly advantageous for the shut-off valve to have one or more intermediate positions, in which liquid flow through the overflow system is possible to limited extent relative to the open position.

By choosing between the one or more intermediate positions the user can select a throughflow speed of the waste water. It is hereby possible to compensate for the varying absorption capacity of the ground surface on which the waste water tank is placed. The waste water tank may hereby be suitable for a greater number of ground surface types.

The overflow system can comprise a tap for selectively shutting off the overflow system, wherein the tap comprises the shut-off valve. By means of the tap the overflow system can be shut off or opened in simple manner, and all intermediate positions can be selected.

In yet another embodiment of the portable waste water tank the overflow system comprises a filter at the at least one overflow inlet for the purpose of filtering waste water flowing into the overflow system.

Filtering the waste water at the overflow inlet prevents blockage of the overflow system. The filter can alternatively or additionally be used to filter waste water to a sufficient extent to ensure that discharging thereof is no longer undesirable, or is so to lesser extent.

The filter can be a screen filter.

In yet another embodiment of the portable waste water tank it further comprises a screen arranged substantially parallel to the bottom, between the peripheral wall.

By means of the screen waste water can be screened before it reaches the overflow. The screen can therefore be arranged above the overflow system, i.e. on a side thereof remote from the bottom. By screening the waste water, the waste water can be discharged after screening at locations where this would otherwise not be permitted in this case.

It is preferred for the screen to be removable from the waste water tank. The screen can thereby be cleaned and/or emptied in relatively simple manner, for instance after emptying of the waste water tank.

In yet another embodiment of the portable waste water tank it is provided with a removable container with a container bottom and a container peripheral wall, wherein the container bottom comprises the screen.

By providing a container a double bottom is provided in the portable waste water tank. The container can be placeable in the waste water tank for this purpose, for instance by supporting on a free end of the peripheral wall, for instance when it is situated at least partially in the receiving space. Providing the container with the screen creates an additional option for settling of dirt in the waste water. The water which ultimately leaves the tank through the overflow system can thereby thus be cleaner.

It is advantageous here for the container bottom to have a first segment and a second segment, wherein the first segment lies closer to a free end of the container peripheral wall than the second segment, and wherein passage openings of the screen are arranged in the first segment.

The passage openings are hereby arranged in a raised part of the bottom. A layer of waste water can hereby remain adjacently of the raised part, which can enhance the settling of dirt in the waste water.

The passage openings of the screen are particularly arranged only in the first segment.

In yet another embodiment of the portable waste water tank the waste water tank is further provided with a textile filter for filtering water let into the receiving space.

The textile filter can be used to remove relatively fine contamination from the waste water.

The textile filter can be arranged optionally releasably on the screen. The screen can thereby provide the necessary structural integrity for the textile filter, and the textile filter can contribute to the settling of dirt in the waste water.

In yet another embodiment of the portable waste water tank it is further provided with a cover for closing at least the receiving space.

By means of the cover the waste water tank can be transported in relatively simple manner in order to be emptied, wherein the chance of leaking is reduced.

The cover is particularly configured to be arranged on a free end of the peripheral wall of the waste water tank and on a free end of the container peripheral wall in order to close respectively the waste water tank and the container.

The cover can thereby be used to close the container, and thereby therefore also close the receiving space, or to be arranged directly on the peripheral edge of the tank in order to close the receiving space without the container being used. This makes use of the container optional.

The cover is preferably provided with a reclosable opening. The opening can be used for emptying the tank and for letting water into the tank while the cover is arranged on the tank. The cover can thereby thus remain arranged during use. This can have the advantage that vermin has no or only restricted access to the waste water tank and/or that the amount of odour escaping from the waste water tank is limited.

In order to enhance the emptying of the waste water tank the reclosable opening can be provided with a closable pouring spout.

It is particularly advantageous here for the closable pouring spout to be deformable between a first state, in which the pouring spout extends in a first direction away from a main plane of the cover, and a second state in which the pouring spout does not extend in the first direction, or does so to lesser extent than in the first state.

Because the pouring spout is deformable, it can be brought into the first state for simply pouring, and conversely brought into the second state for closing and/or storage of the tank. The length of the pouring spout in the first state can further be used to ensure that a free end of the pouring spout lies at a relatively high position, whereby it is able to connect to a waste water drain of a recreational vehicle which is mounted at a relatively high position. For use in vehicles with a lower waste water drain the pouring spout can, if necessary, be brought wholly or partially into the second state.

In order to make the portable waste water tank easily portable the walls and bottom and optionally the screen can comprise plastic. It is possible to opt for a plastic which is sufficiently strong to carry waste water but sufficiently light so as not to unnecessarily impede carrying of the waste water tank.

In order to improve the portability of the waste water tank it can be provided with a handle and/or one or more handgrips. The handle can be attached to the peripheral wall, but it is also possible to envisage additionally or alternatively providing the container with a handle. Both the container and the peripheral wall may be provided with one or more handgrips, or only one of the two may be provided with at least one handgrip.

The invention also relates to a method for discharging waste water, such as greywater, from a recreational vehicle, such as a camper or caravan, comprising of placing a portable waste water tank as described above at a waste water drain of the recreational vehicle and collecting waste water therewith, and allowing the collected waste water to run off gradually through the overflow system.

By discharging the waste water through the overflow system it is relatively clean in that the overflow system enhances settling of dirt in the waste water. Having the waste water run off gradually allows the ground surface to absorb the drained water sufficiently quickly, this preventing the formation of puddles of waste water on the ground surface.

The invention will be further described below with reference to the accompanying figures, wherein:
Figure 1 shows a schematic side view of a caravan and a portable waste water tank;
Figure 2A shows schematically a perspective view of the portable waste water tank with a removable container;
Figure 2B shows schematically a cross-section of the portable waste water tank of figure 2A;
Figure 2C shows schematically a cross-section of the portable waste water tank of figures 2A and 2B without container;
Figure 2D shows schematically a cross-section of the removable container of figures 2A and 2B; and
Figure 2E shows schematically a top view of the removable container of figures 2A, 2B and 2D.

Corresponding elements are designated in the figures with corresponding reference numerals.

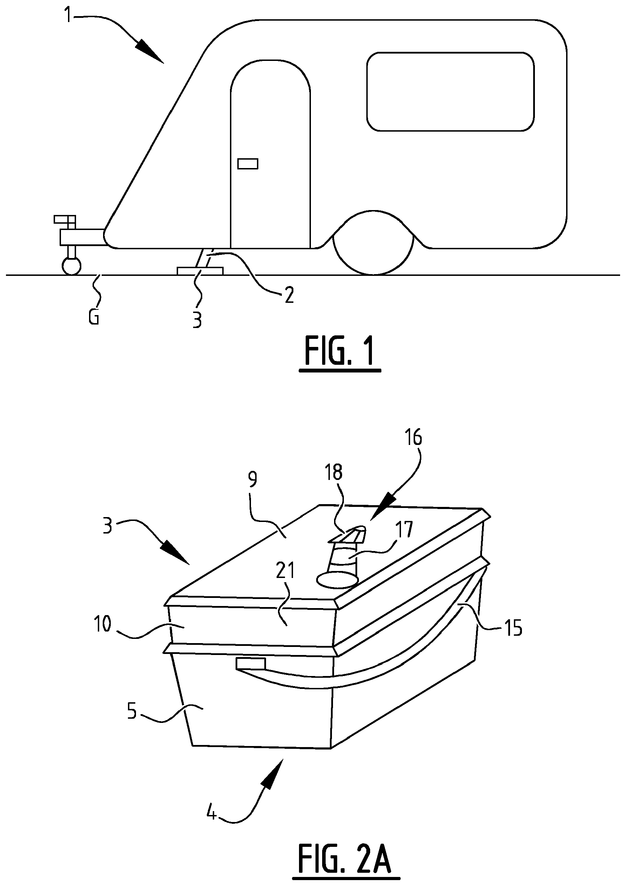

Figure 1 shows a caravan 1 with a waste water discharge 2 for greywater under which a portable waste water tank 3 is placed. The portable waste water tank 3 and the caravan 1 are positioned on a ground surface G. For the sake of simplicity the portable waste water tank 3 is shown in simplified view in figure 1.

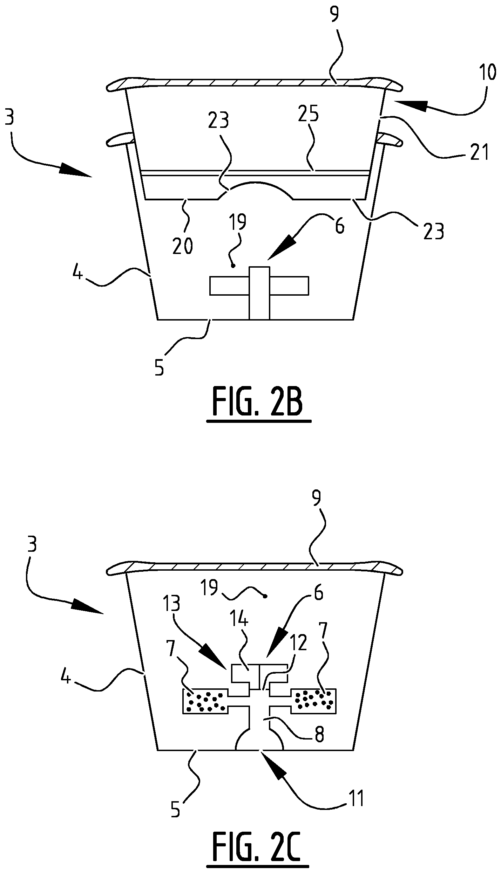

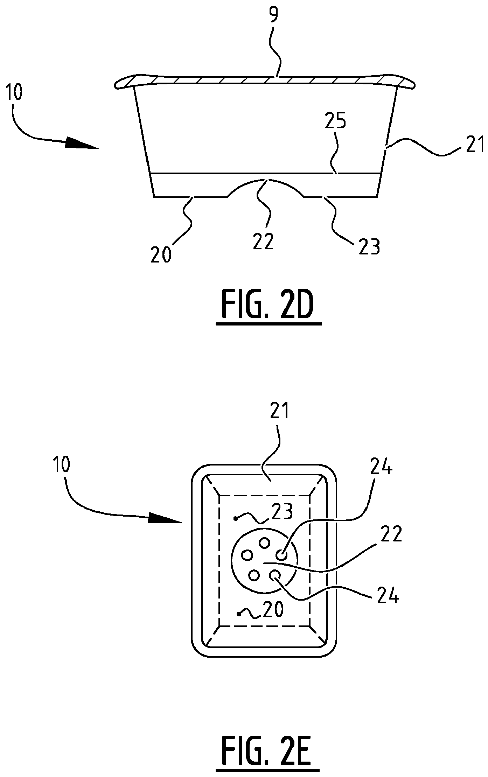

Figures 2A - 2E show the portable waste water tank 3 in more detail. The portable waste water tank 3 has a bottom 4 and a peripheral wall 5 which are manufactured from plastic. Further provided is a handle 15. Handgrips could of course also be arranged. In figures 2A and 2B a removable container 10 is placed in a receiving space which is formed by the peripheral wall 5 and the bottom 3. An upper side of the removable container 10 is closed by cover 9 with opening 16, pull-out pouring spout 17 and reclosable cap 18. The spout 17 extends away from cover 9 in figure 2A, and is manufactured from a deformable plastic. Spout 17 can thereby also be pushed toward the underside of cover 9. Figure 2B also shows an overflow system 6, which is shown in simplified view in this figure for the sake of simplicity. Figure 2C shows the overflow system 6 in more detail. Overflow system 6 has two inlets, each formed by a perforated pipe part 7. The perforated pipe part 7 hereby forms a filter. Inlets 7 are connected via a standing conduit 8, which extends upward from bottom 4, to an outlet 11 of the receiving space 19. Overflow system 6 is provided with a shut-off valve 12 of a tap 13 which can close inlets 7 off from outlet 11 by rotation of a handle 14 of the tap, or can allow a limited flow of liquid from inlets 7 to outlet 11. Overflow system 6 is arranged wholly in receiving space 19 and debouches at outlet 11 in the bottom 4 of the portable waste water tank 3. Further also visible in figure 2C is that cover 9 is arranged on container 10 and thereby thus indirectly closes receiving space 19 off from waste water tank 3.

Referring once again to figure 2B, it is noted that container 10 is placed partially in receiving space 19 and can be removed therefrom. When container 10 has been removed, receiving space 19 can still be closed with cover 9 by arranging this cover on the peripheral wall 5 of waste water tank 3. Container 10 has a container bottom 20 and a container peripheral wall 21 which extends from the container bottom 20. Container 10 is manufactured from plastic. The container bottom 20 has a first segment 22 and a second segment 23, wherein the first segment 22 lies higher than the second segment 23. Figure 2E shows that openings 24 are arranged in container bottom 20, more specifically in first segment 22, whereby container bottom 20 forms a screen. Also arranged in container 10 is a textile filter 25 which extends parallel to container bottom 20 between the container peripheral wall 21. Although shown here at a distance from container bottom 20, the textile filter can be placed thereon.

Although the invention is elucidated above on the basis of several specific examples and embodiments, the invention is not limited thereto. The invention is conversely also defined by the numbered clauses stated below, and by the appended claims.

### CLAUSES

1. Portable waste water tank, for instance for placing under a recreational vehicle such as a caravan or camper, for collecting waste water, such as greywater, from the recreational vehicle and discharging it, wherein the waste water tank comprises a bottom and a peripheral wall connected thereto, these together defining a receiving space for liquid, such as waste water, for instance greywater,
   wherein the receiving space has an opening for letting liquid into the receiving space and an outlet for letting liquid out of the receiving space.
   characterized by
   an overflow system, wherein the overflow system comprises at least one overflow inlet which is connected for liquid throughflow to the receiving space at a distance from the bottom, wherein the at least one overflow inlet is connected for liquid throughflow to the outlet of the receiving space.
2. Portable waste water tank according to the foregoing clause, wherein the overflow system is provided at least partially, preferably wholly, inside the receiving space.
3. Portable waste water tank according to any one of the foregoing clauses, wherein the overflow outlet is situated in the bottom.
4. Portable waste water tank according to any one of the foregoing clauses, further provided with a shut-off valve which is displaceable from a closed position, in which the shut-off valve shuts off the overflow system and prevents liquid throughflow therethrough, to an open position in which the shut-off valve allows liquid flow through the overflow system.
5. Portable waste water tank according to the foregoing clause, wherein the shut-off valve has one or more intermediate positions, in which liquid flow through the overflow system is possible to limited extent relative to the open position.
6. Portable waste water tank according to any one of the clauses 4-5, wherein the overflow system further comprises a tap for selectively shutting off the overflow system, wherein the tap comprises the shut-off valve.
7. Portable waste water tank according to any one of the foregoing clauses, wherein the overflow system comprises a filter at the at least one overflow inlet for the purpose of filtering waste water flowing into the overflow system.
8. Portable waste water tank according to any one of the foregoing clauses, further comprising a screen arranged substantially parallel to the bottom, between the peripheral wall.
9. Portable waste water tank according to the foregoing clause, wherein the screen is removable from the waste water tank.
10. Portable waste water tank according to the foregoing clause, further provided with a removable container with a container bottom and a container peripheral wall, wherein the container bottom comprises the screen.
11. Portable waste water tank according to the foregoing clause, wherein the container bottom has a first segment and a second segment, wherein the first segment lies closer to a free end of the container peripheral wall than the second segment, and wherein passage openings of the screen are arranged in the first segment.
12. Portable waste water tank according to any one of the foregoing clauses, wherein the waste water tank is further provided with a textile filter for filtering water let into the receiving space.
13. Portable waste water tank according to the foregoing clause, wherein the textile filter is arranged or is arrangeable on the screen.
14. Portable waste water tank according to any one of the foregoing clauses, further provided with a cover for closing at least the receiving space.
15. Portable waste water tank according to the foregoing clause, wherein the cover is configured to be arranged on a free end of the peripheral wall of the waste water tank and on a free end of the container peripheral wall in order to close respectively the waste water tank and the container.
16. Portable waste water tank according to any one of the clauses 14-15, wherein the cover is provided with a reclosable opening.
17. Portable waste water tank according to the foregoing clause, wherein the reclosable opening is provided with a closable pouring spout.
18. Portable waste water tank according to the foregoing clause, wherein the closable pouring spout is deformable between a first state, in which the pouring spout extends in a first direction away from a main plane of the cover, and a second state in which the pouring spout does not extend in the first direction, or does so to lesser extent than in the first state.
19. Portable waste water tank according to any one of the foregoing clauses, wherein the walls and bottom and optionally the screen comprise plastic.
20. Portable waste water tank according to any one of the foregoing clauses, further comprising a handle and/or one or more handgrips for carrying the waste water tank.
21. Method for discharging waste water, such as greywater, from a recreational vehicle, such as a camper or caravan, comprising of:
   - placing a portable waste water tank according to any one of the foregoing clauses at a waste water drain of the recreational vehicle and collecting waste water therewith, and
   - allowing the collected waste water to run off gradually through the overflow system.

## Claims

1. Portable waste water tank, for instance for placing under a recreational vehicle such as a caravan or camper, for collecting waste water, such as greywater, from the recreational vehicle and discharging it, wherein the waste water tank comprises a bottom and a peripheral wall connected thereto, these together defining a receiving space for liquid, such as waste water, for instance greywater,
wherein the receiving space has an opening for letting liquid into the receiving space and an outlet for letting liquid out of the receiving space.
**characterized by**
an overflow system, wherein the overflow system comprises at least one overflow inlet which is connected for liquid throughflow to the receiving space at a distance from the bottom, wherein the at least one overflow inlet is connected for liquid throughflow to the outlet of the receiving space.

2. Portable waste water tank according to the foregoing claim, wherein the overflow system is provided at least partially, preferably wholly, inside the receiving space.

3. Portable waste water tank according to any one of the foregoing claims, wherein the overflow outlet is situated in the bottom.

4. Portable waste water tank according to any one of the foregoing claims, further provided with a shut-off valve which is displaceable from a closed position, in which the shut-off valve shuts off the overflow system and prevents liquid throughflow therethrough, to an open position in which the shut-off valve allows liquid flow through the overflow system, wherein the shut-off valve preferably has one or more intermediate positions, in which liquid flow through the overflow system is possible to limited extent relative to the open position and/or wherein the overflow system further comprises a tap for selectively shutting off the overflow system, wherein the tap comprises the shut-off valve.

5. Portable waste water tank according to any one of the foregoing claims, wherein the overflow system comprises a filter at the at least one overflow inlet for the purpose of filtering waste water flowing into the overflow system.

6. Portable waste water tank according to any one of the foregoing claims, further comprising a screen arranged substantially parallel to the bottom, between the peripheral wall, wherein the screen is preferably removable from the waste water tank.

7. Portable waste water tank according to the foregoing claim, further provided with a removable container with a container bottom and a container peripheral wall, wherein the container bottom comprises the screen, wherein the container bottom preferably has a first segment and a second segment, wherein the first segment lies closer to a free end of the container peripheral wall than the second segment, and wherein passage openings of the screen are arranged in the first segment.

8. Portable waste water tank according to any one of the foregoing claims, wherein the waste water tank is further provided with a textile filter for filtering water let into the receiving space, wherein the textile filter is preferably arranged on or arrangeable on the screen.

9. Portable waste water tank according to any one of the foregoing claims, further provided with a cover for closing at least the receiving space, wherein the cover is preferably configured to be arranged on a free end of the peripheral wall of the waste water tank and on a free end of the container peripheral wall in order to close respectively the waste water tank and the container.

10. Portable waste water tank according to claim 9, wherein the cover is provided with a reclosable opening.

11. Portable waste water tank according to the foregoing claim, wherein the reclosable opening is provided with a closable pouring spout.

12. Portable waste water tank according to the foregoing claim, wherein the closable pouring spout is deformable between a first state, in which the pouring spout extends in a first direction away from a main plane of the cover, and a second state in which the pouring spout does not extend in the first direction, or does so to lesser extent than in the first state.

13. Portable waste water tank according to any one of the foregoing claims, wherein the walls and bottom and optionally the screen comprise plastic.

14. Portable waste water tank according to any one of the foregoing claims, further comprising a handle and/or one or more handgrips for carrying the waste water tank.

15. Method for discharging waste water, such as greywater, from a recreational vehicle, such as a camper or caravan, comprising of:
- placing a portable waste water tank according to any one of the foregoing claims at a waste water drain of the recreational vehicle and collecting waste water therewith, and
- allowing the collected waste water to run off gradually through the overflow system.
